# EUROPEAN PATENT APPLICATION

(11) **EP 2 735 984 A1**
(43) Date of publication of application: **28.05.2014**
(21) Application number: 13768526.9
(22) Date of filing: 27.03.2013
(51) Int. Cl.: G06F 17/30

(54) **VIDEO QUERY METHOD, DEVICE AND SYSTEM**

(30) Priority: 27.03.2012 CN 201210084264
(71) Applicant: Huawei Technologies Co., Ltd, Shenzhen, Guangdong 518129 (CN)
(72) Inventor: WANG, Feng, Shenzhen Guangdong 518129 (CN)
(74) Representative: Maiwald Patentanwalts GmbH
(86) International application number: PCT/CN2013/073289
(87) International publication number: WO 2013/143465

(57) **Abstract**

A video search method, apparatus, and system provided in embodiments of the present invention relate to the field of communications, which can improve video search efficiency and increase a hit rate of a target video. The video search method includes: obtaining feature search information input by a user; cutting irrelevant videos that do not include the feature search information among to-be-searched videos to obtain main videos; or filtering indexes of to-be-searched videos according to the feature search information to obtain indexes of video segments that meet a search criterion; sorting the main videos according to a matching degree between the main videos and the feature search information to obtain a main video list for the user to select and play a video in the main video list; or sorting, according to a matching degree, the indexes of the video segments that meet the search criterion, to form an index list of the video segments for the user to select and play a video in the index list.

## Description

This application claims priority to Chinese Patent Application No. 201210084264.0, filed with the Chinese Patent Office on March 27, 2012 and entitled "VIDEO SEARCH METHOD, APPARATUS, AND SYSTEM", which is incorporated herein by reference in its entirety.

### TECHNICAL FIELD

The present invention relates to the field of communications, and in particular, to a video search method, apparatus, and system.

### BACKGROUND

In the prior art, a network video surveillance service is a broadband network-based value-added service for remote image surveillance, transmission, storage, and management. This service uses a broadband network to connect scattered, independent image collection points to implement cross-region, full-range unified surveillance, unified storage, unified management, and resource sharing. A network video surveillance system meets demands of both general surveillance and professional surveillance, has independent networking, and may also carry out a video surveillance service on mobile stream media.

Intelligent analysis of video surveillance is the study of computer vision (CV, Computer Vision) and artificial intelligence (AI, Artificial Intelligent). A core of the intelligent analysis is video content analysis, and a development objective is to establish a mapping between an image and an event description, so as to enable a computer to distinguish and identify a key target object from numerous video images. This study, with the help of a powerful data processing capability of a computer, filters out useless or interferential information in an image, and automatically analyzes and obtains key and useful information in a video source, so that a conventional surveillance system has a more "intelligent" learning and thinking manner.

In an intelligent analysis technology, identification may be performed on an object that appears in a video, so as to identify a specific feature of the object and behavior of the object. For example, for vehicle identification, features such as a license plate color, a license plate number, a vehicle color, and a vehicle model can be identified. In another example, for person identification, a dress color, whether a hat is worn, a hat color, and the like of a person can be identified. And, for behavior identification, information such as a moving direction of a target object can be identified.

With some video search methods in the prior art, in combination with an intelligent analysis technology, preliminary analysis is performed on obtained videos such as city security surveillance video records, and then analyzed videos are searched according to feature information of a target video input by a user, so as to obtain a relevant video list. And then, the user searches videos in the video list one by one. Because the video list has a large number of videos and the videos are disorder, video search efficiency is low, and a hit rate of the target video is low.

### SUMMARY

Embodiments of the present invention provide a video search method, apparatus, and system, so as to improve video search efficiency and increase a hit rate of a target video.

In order to achieve the foregoing objectives, the embodiments of the present invention adopt the following technical solutions:
In one aspect, a video search method is provided, which includes:
   obtaining feature search information input by a user;
   cutting irrelevant videos that do not include the feature search information among to-be-searched videos to obtain main videos; or filtering indexes of to-be-searched videos according to the feature search information to obtain indexes of video segments that meet a search criterion; and
   sorting the main videos according to a matching degree between the main videos and the feature search information to obtain a main video list for the user to select and play a video in the main video list; or sorting, according to a matching degree, the indexes of the video segments that meet the search criterion, to form an index list of the video segments for the user to select and play a video in the index list.

In one aspect, a video search apparatus is provided, which includes:
a feature obtaining unit, configured to obtain feature search information input by a user;
a processing unit, configured to cut irrelevant videos that do not include the feature search information among to-be-searched videos to obtain main videos; or filter indexes of to-be-searched videos according to the feature search information to obtain indexes of video segments that meet a search criterion; and
a sorting unit, configured to sort the main videos according to a matching degree between the main videos and the feature search information to obtain a main video list for the user to select and play a video in the main video list; or sort, according to a matching degree, the indexes of the video segments that meet the search criterion, and place an index of a video segment with a higher matching degree on the top and place an index of a video segment with a lower matching degree at the bottom to form an index list of the video segments for the user to select and play a video in the index list.

In one aspect, a video search system is provided, which includes: any one of the foregoing video search apparatuses.

The video search method, apparatus, and system provided in the embodiments of the present invention include: obtaining feature search information input by a user; cutting irrelevant videos that do not include the feature search information among to-be-searched videos to obtain main videos; and sorting the main videos according to a matching degree between the main videos and the feature search information to obtain a main video list for the user to select and play a video in the main video list. In this way, by cutting or filtering irrelevant videos among to-be-searched videos, it is avoided that a user wastes a large amount of time in the irrelevant videos during video search; and meanwhile, main videos are sorted according to a matching degree between the main videos and feature search information to facilitate video search of the user, thereby improving video search efficiency and increasing a hit rate of a target video.

### BRIEF DESCRIPTION OF DRAWINGS

To describe the technical solutions in the embodiments of the present invention or in the prior art more clearly, the accompanying drawings required for describing the embodiments or the prior art are introduced briefly in the following. Apparently, the accompanying drawings in the following descriptions show only some of the embodiments of the present invention, and a person of ordinary skill in the art can also obtain other drawings according to these accompanying drawings without creative efforts.
FIG. 1 is a flow chart of a video search method according to an embodiment of the present invention;
FIG. 2 is a flow chart of another video search method according to an embodiment of the present invention;
FIG. 3 is a schematic diagram of a video user interface according to an embodiment of the present invention;
FIG. 4 is a schematic diagram of a method of interaction between a user and a video search apparatus;
FIG. 5 is a schematic structural diagram of a video search apparatus according to an embodiment of the present invention;
FIG. 6 is a schematic structural diagram of another video search apparatus according to an embodiment of the present invention;
FIG. 7 is a schematic structural diagram of still another video search apparatus according to an embodiment of the present invention; and
FIG. 8 is a schematic structural diagram of yet another video search apparatus according to an embodiment of the present invention.

### DESCRIPTION OF EMBODIMENTS

The technical solutions in the embodiments of the present invention are clearly and completely described in the following with reference to the accompanying drawings in the embodiments of the present invention. Apparently, the embodiments to be described are only a part rather than all of the embodiments of the present invention. All other embodiments obtained by a person skilled in the art based on the embodiments of the present invention without creative efforts shall fall within the protection scope of the present invention.

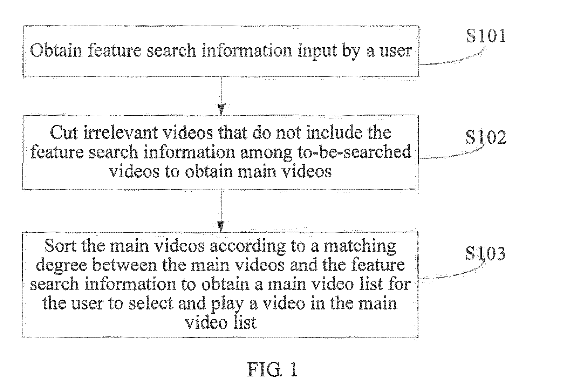

An embodiment of the present invention provides a video search method, as shown in FIG. 1, which includes:
S101: Obtain feature search information input by a user.

Optionally, before a user inputs feature search information, a search information range may be prompted to the user, and then the user selects search information in the search range according to a search objective, where a form of the feature search information may be "Sedan/Blue".

S 102: Cut irrelevant videos that do not include the feature search information among to-be-searched videos to obtain main videos; or filter indexes of to-be-searched videos according to the feature search information to obtain indexes of video segments that meet a search criterion.

Optionally, step S103 may include: editing videos that include the feature search information among the to-be-searched videos to obtain the main videos; or editing videos that do not include the feature search information among the to-be-searched videos to obtain the irrelevant videos.

S103: Sort the main videos according to a matching degree between the main videos and the feature search information to obtain a main video list for the user to select and play a video in the main video list; or sort, according to a matching degree, the indexes of the video segments that meet the search criterion, and place an index of a video segment with a higher matching degree on the top and place an index of a video segment with a lower matching degree at the bottom to form an index list of the video segments for the user to select and play a video in the index list.

The matching degree may indicate an information correlation degree between a main video and the feature search information, and the sorting manner may be a descending form. For example, if there are five features in the feature search information, in the main video list, a matching degree of a main video with four of the features is higher than that of a main video with three of the features, and the main video with four of the features is placed before the main video with three of the features.

In this way, by cutting irrelevant videos among to-be-searched videos, it is avoided that a user wastes a large amount of time in the irrelevant videos during video search; and meanwhile, main videos are sorted according to a matching degree between the main videos and feature search information to facilitate video search of the user, thereby improving video search efficiency and increasing a hit rate of a target video.

Further, after step S103, the method provided in the embodiment of the present invention may further include:
sorting the irrelevant videos according to a matching degree between the irrelevant videos and the feature search information to obtain an irrelevant video list, where the sorting manner may be a descending form; and outputting the main video list and the irrelevant video list, where the irrelevant video list may be after the main video list, so that the user selects and plays a video in the main video list and the irrelevant video list. An information correlation degree between the main video and the feature search information is relatively high, and an information correlation degree between the irrelevant video and the feature search information is relatively low. However, to ensure comprehensiveness of video information provided for the user, the irrelevant video is also kept although the correlation degree of the irrelevant video is relatively low. Generally, the irrelevant videos are some images without an action subject. For example, when an edited video is a video record, an irrelevant video is generally a video record of a road without a pedestrian or vehicle at late night. An irrelevant video list is output to avoid a case that a user misses effective information that exists in an irrelevant video.

In particular, before step S101, the method provided in the embodiment of the present invention may further include: obtaining to-be-searched videos within a period of time input by the user, and in this way a video search range can be narrowed down. Optionally, before the user inputs a period of time for video search, a range of a period of time may be prompted to the user to facilitate selection of the user. Definitely, the user may also input a period of time. The period of time input by the user may be in the form of "yyyy-mm-dd to yyyy-mm-dd".

And videos that do not belong to a video generation range among obtained videos may further be cut to obtain to-be-searched videos; or an index of videos that do not belong to a video generation range among obtained videos may be filtered to obtain indexes of to-be-searched videos.

The video generation range may be set according to a specific case, for example, may include any one or more of: a location, behavior, a behavior subject, and a color of a behavior subject within a specific period of time. The video generation range may be a preset fixed range, or may be a dynamic range randomly set by a searcher. For example, a form of the video generation range may be "a person does something at a place within a period of time", or may be "a vehicle travels in a direction at an intersection within a period of time".

In this way, before an intelligent analysis system performs analysis on a video according to feature search information, preliminary analysis has been performed through a video generation range, thereby further improving video analysis efficiency and reducing a workload of the user.

Further, the method further includes:
generating, according to each information in the video generation range, corresponding video summary information corresponding to each video in a video list; and outputting the video summary information corresponding to each video in the video list. Generally, a video feature in the video generation range is more comprehensive than a video feature in the feature search information. Therefore, the video summary information may be generated after the videos that do not belong to the video generation range among the obtained videos are cut to obtain the to-be-searched videos. However, the to-be-searched videos are edited again according to the feature search information to obtain the irrelevant videos and the main videos. Therefore, video summary information output in a main video may be information that is within the video generation range and included in the main video; and video summary information output in an irrelevant video may be information that is within the video generation range and included in the irrelevant video. For example, it is assumed that the video generation range is "2011-6-1/Sedan/Blue/Travel to the east", the period of time input by the user is "2011-6-1 ", and the feature search information input by the user is "Sedan/Blue". An edited main video not only includes a blue sedan, but also shows a state of traveling to the east of the sedan. Therefore, "2011-6-1/Sedan/Blue/Travel to the east" may be output. However, if the feature search information input by the user is "Vehicle/Blue", an edited main video not only includes a blue vehicle and the vehicle is a sedan, but also shows a state of traveling to the east of the sedan. Therefore, "2011-6-1/Sedan/Blue/Travel to the east" may still be output.

In particular, the foregoing summary information may be shown as a sentence by joining various independent feature information after the intelligent analysis system performs feature analysis on a video, for example, "On 2011-6-1, a blue sedan travels to the east", or may also be shown in the form of several words, for example, "2011-6-1/Sedan/Blue/Travel to the east".

In this way, the user may perform a basic judgment on a corresponding video according to video summary information to determine a sequence of viewing videos, thereby improving search efficiency.

Further, a video snapshot image corresponding to the video summary information may further be generated according to the video summary information. When the user triggers the video summary information, the video snapshot image or a video clip is displayed. The foregoing snapshot image may be a photo of a behavior subject, such as a person or a vehicle, in the summary information. The foregoing video clip may be a behavior short film of a behavior subject in the summary information. In this way, the user may view key information in a video more visually through the snapshot image and the video clip, thereby reducing search time and improving search efficiency.

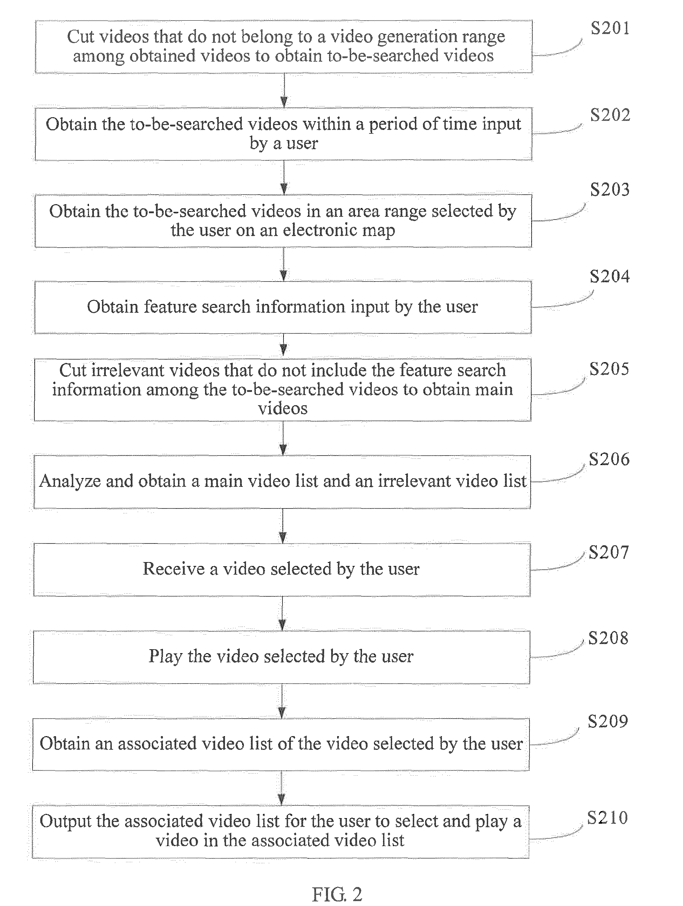

For example, when the video search method is used in a video record search field, that is, when a to-be-searched video is a video record, a video search method provided in an embodiment of the present invention, as shown in FIG. 2, includes:
S201: Cut videos that do not belong to a video generation range among obtained videos to obtain to-be-searched videos.

The video generation range may include any one or more of: a location, a behavior, a behavior subject, and a color of a behavior subject within a specific period of time. The video generation range may be preset, or may be dynamically set by a searcher. For example, it is assumed in the embodiment of the present invention that the video generation range is preset, and a specific form of the video generation range may be "a vehicle travels in a direction at an intersection within a period of time".

Videos are edited according to the video generation range to obtain the to-be-searched videos, that is, when a part of videos belong to "a vehicle travels in a direction at an intersection within a period of time", this part are kept to obtain the to-be-searched videos. In this way, preliminary editing is performed on the obtained videos according to the video generation range to facilitate storage and classification of a video record and also facilitate subsequent search.

S202: Obtain the to-be-searched videos within a period of time input by a user.

S203: Obtain the to-be-searched videos in an area range selected by the user on an electronic map. In an actual application, the electronic map may be displayed on a device such as a common display or a touch-sensitive display in the form of a GUI (Graphical User Interface, graphical user interface), and then the user selects an area range of video search with a box in a mouse or tapping manner. Generally, city security surveillance regions include various major intersections, important road sections, security gates, and the like. In these regions, recording devices are disposed. Therefore, if video records in a range of the entire city are searched, search efficiency is low. By selecting an area range, a video search range can be narrowed down, thereby reducing a workload of the user and provideing search efficiency.

S204: Obtain feature search information input by the user.

Optionally, a feature search option may be provided for the user through a client device such as a computer for the user to perform selection. Prompt content may include a search period of time, a target type such as a vehicle or a person, and a target color. When the user selects a vehicle, a vehicle model such as a sedan, a truck, a multi-purpose vehicle, a bus, or a special purpose vehicle, a license plate color, a license plate number, and the like may be further prompted. When the user selects a person, a dress color, whether a hat is worn, a hat color, riding a bike or not, and the like of the person may be prompted. Definitely, the user may directly input the feature search information, for example, "Sedan/Blue".

Then, the feature search information input by the user is obtained.

S205: Cut irrelevant videos that do not include the feature search information among the to-be-searched videos to obtain main videos.

For example, the to-be-searched videos in step S205 refers to recorded videos that are obtained after preliminarily editing is performed according to the video generation range and then screening is performed according to the period of time and the area range that are input by the user.

Specific processing steps of step S205 are: editing videos that include the feature search information among the to-be-searched videos to obtain the main videos; or editing videos that do not include the feature search information among the to-be-searched videos to obtain the irrelevant videos.

S206: Analyze and obtain a main video list and an irrelevant video list.

The main videos are sorted in descending order of a matching degree between the main videos and the feature search information to obtain the main video list, and further, the irrelevant videos are sorted according to a matching degree between the irrelevant videos and the feature search information to obtain the irrelevant video list. Then, the main video list and the irrelevant video list are output, where the irrelevant video list is after the main video list. In this way, the user can click and play information in the video list one by one in sequence rather than search in a mass of disorder videos in the prior art, thereby saving time of a customer and improving search efficiency. In particular, the foregoing analysis process may be completed by an intelligent analysis system. For example, when the foregoing video generation range is "a vehicle travels in a direction at an intersection within a period of time", corresponding video summary information corresponding to a video in each video list is generated according to each information in the video generation range, for example, "From 2011-6-1 to 2011-6-2, a blue sedan travels to the east on the Kunming road". Further, when a behavior subject in a to-be-searched video is a vehicle, the intelligent analysis system and/or a GIS (Geographic Information System, geographic information system) and/or a vehicle information library may be searched for relevant information about the vehicle in the main video. It should be noted that, the vehicle information library in the embodiment of the present invention is only a general term, and may be another platform such as a national general police service platform or traffic control network platform. In this embodiment, a main function of the vehicle information library is that more detailed and comprehensive vehicle information may be found through a license plate number.

In this way, more comprehensive information can be provided for the user to facilitate video search of the user. For example, it is obtained through intelligent analysis that a feature of a target vehicle in a video is: a license plate number of Jing A 123456. Then, the vehicle information library may be searched to find more detailed information according to the license plate, and finally, it is obtained that "Red sedan/Santana 2000 registered in 2005/Owner Zhang San/Phone number 147147/Jing A 123456". Then, the video summary information is output, where the summary information may include the foregoing vehicle information. The foregoing video summary information, when being output, may be completely shown; or may be partially hidden and completely shown when the user moves a mouse, a stylus, and the like to the hidden summary.

Analysis of a traveling direction of a vehicle is as follows: location information of a camera apparatus corresponding to the to-be-searched video is obtained; a traveling direction of a vehicle is determined according to the location information of the camera apparatus and a moving direction of the vehicle relative to the camera apparatus in the to-be-searched video; an output video summary includes the traveling direction of the vehicle. For example, a system searches, according to an identifier of a camera to which a video record belongs, the GIS for information about a location where the camera is located, where the information includes an exact location of the camera, for example, a crossroad of the Kunming road, the run of a road section, for example, from north to south, from east to west, and the like. Then, with reference to a moving direction of a target vehicle in a video recorded by the camera, where the moving direction is obtained through analysis of the intelligent analysis system, for example, movement from right to left, an actual moving direction of the target vehicle is obtained through comprehensive calculation. For example, when the camera is installed at a southern side of a road and the road is from east to west, it is obtained through intelligent analysis that an object moves from left to right in the video. Then, through calculation, it is obtained that an actual moving direction of the target object is from west to east. The output video summary information may include "Travel from west to east".

In particular, when different feature descriptions about a same feature exist in the feature search information and the relevant information about the vehicle, the different feature descriptions may be output. For example, if the feature search information input by the user is that: The license plate number is Jing A 123456/Blue, but it is found in the vehicle information library that the vehicle is red, the different feature descriptions are shown in the summary information, which may be shown as "Jing A 123456/Blue (red)", where content in the brackets may be highlighted with a different color from other characters to facilitate differentiation of the user.

Further, a video snapshot image corresponding to the video summary information may further be generated according to the video summary information. When the user triggers the video summary information, the video snapshot image or a video clip is displayed. The foregoing snapshot image may be a photo of a behavior subject, such as a person or a vehicle, in the summary information. The foregoing video clip may be a behavior short film of a behavior subject in the summary information. Definitely, the image and the video clip should cover content in the video summary information as much as possible, for example, a vehicle, a license plate, and a vehicle color is displayed through one image or a short film of several seconds, to facilitate search of the user. When videos in the foregoing main video list and irrelevant video list are output, both the foregoing video summary information and video snapshot image may be carried.

S207: Receive a video selected by the user.

The user may randomly select and play a video in sequence in a main list and an irrelevant list, or may randomly select and play a video in a main list and an irrelevant list according to text summary shown in the list.

S208: Play the video selected by the user.

S209: Obtain, among the to-be-searched videos according to feature information of the video in the video selected by the user, an associated video index list of the video selected by the user. The feature information of the video belongs to the video generation range.

When the user selects the video to play, the user may search, among the to-be-searched videos, associated videos according to the feature information of the video in the selected video. The foregoing associated videos may not be performed, and a video list is directly generated; or reference may be made to the method in step S202, the associated videos are edited into main videos and irrelevant videos, and then the main videos and the irrelevant videos are sorted separately to generate the associated video list. Meanwhile, the list may include text summary information.

S210: Output the associated video list for the user to select and play a video in the associated video list.

It should be noted that, a sequence of steps for the video search method provided in the embodiment of the present invention may be appropriately adjusted, and the number of steps may also be increased or decreased according to a circumstance. Variations to the method can be easily figured out by a person skilled in the art within the technical scope disclosed in the present invention, which are not longer described herein.

In particular, output of the associated videos expands a video range relevant to a target video that is to be searched by the user, and increases a hit rate of the target video. Further, a navigational link may be set on a user interface, and the user may switch between an associated video list and an original video list by clicking the navigational link.

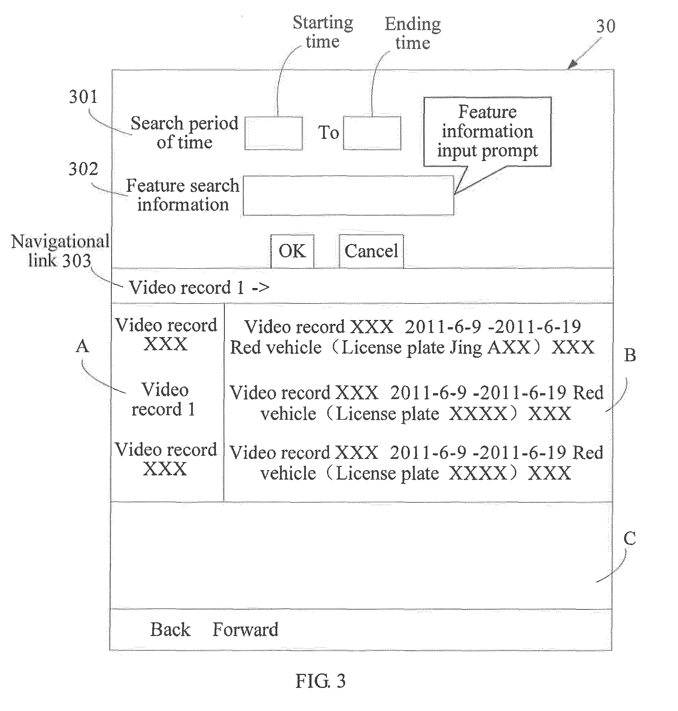

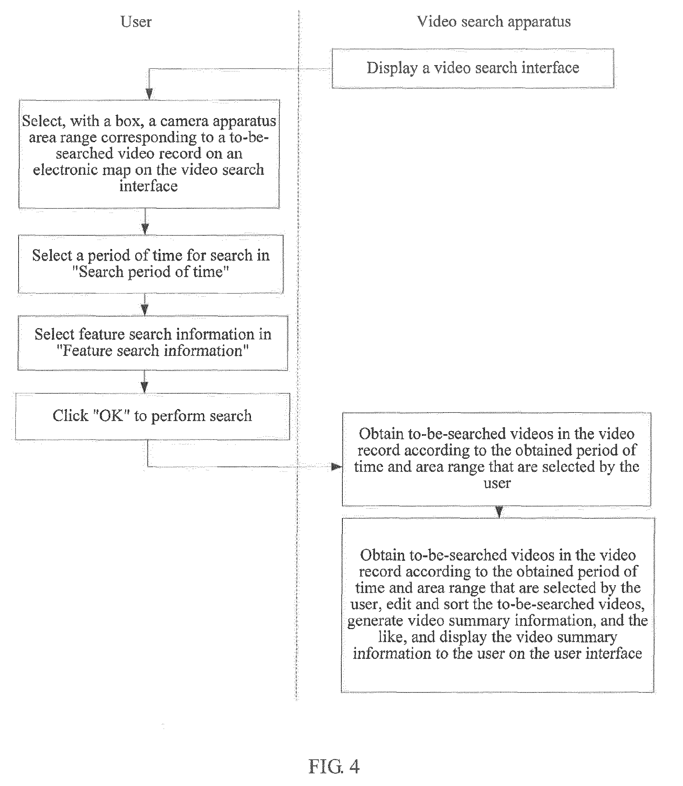

For example, a user interface 30 may be shown in FIG. 3. A search period of time 301 may be provided for a user to select a starting time and an ending time of search, and feature search information 302 may be provided for the user to select feature search information according to a feature information input prompt. A video list may be displayed in an area A. It is assumed that the user clicks and plays a video record 1, and a relevant video list of the video record 1 is displayed in an area B. In particular, an area C may be an electronic map area for the user to select a video range with a box when the user starts search. However, when the number of video lists is too large, an electronic map may be hidden, and the area C is used to display the video lists. Meanwhile, a navigational link 303 may display a serial number of a video currently played, and the user may switch between an associated video list and an original video list by clicking the navigational link. Optionally, a method for a user to interact with a video search apparatus provided in the present invention is shown in FIG. 4. First, the video search apparatus displays a video search interface to the user. Then, the user selects, with a box, a camera apparatus area range corresponding to a to-be-searched video record on an electronic map on the video search interface. Next, the user selects a period of time for search in "Search period of time" and selects feature search information in "Feature search information", and then clicks "OK" to perform search. The video search apparatus obtains to-be-searched videos in the video record according to the obtained period of time and area range that are selected by the user, edits and sorts the to-be-searched videos, generates video summary information, and the like, and displays the video summary information to the user on the user interface. A specific interface is shown in FIG. 3. In particular, the foregoing method is only an example for description, and in an actual application, a corresponding step may be added or removed. Variations to the method can be easily figured out by a person skilled in the art within the technical scope disclosed in the present invention, which are not longer described herein.

With the video search method provided in the embodiment of the present invention, by cutting irrelevant videos among to-be-searched videos, it is avoided that a user wastes a large amount of time in the irrelevant videos during video search; and meanwhile, main videos are sorted according to a matching degree between the main videos and feature search information to facilitate video search of the user, thereby improving video search efficiency and increasing a hit rate of a target video. Furthermore, by outputting video summary information and a video snapshot image, the user obtains video information more visually to facilitate video search.

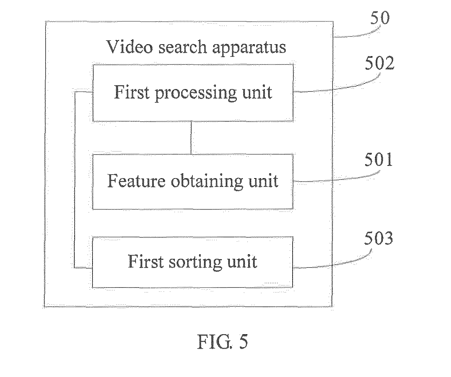

A video search apparatus 50 provided in an embodiment of the present invention, as shown in FIG 5, includes:
A feature obtaining unit 501 is configured to obtain feature search information input by a user.

The feature obtaining unit 501 may be implemented by a mobile phone terminal, a PDA (Personal Digital Assistant, personal digital assistant), a PC (personal computer, personal computer) or a surveillance central device.

A first processing unit 502 is configured to cut irrelevant videos that do not include the feature search information among to-be-searched videos to obtain main videos. The first processing unit 502 is specifically configured to:
edit videos that include the feature search information among the to-be-searched videos to obtain the main videos; or edit videos that do not include the feature search information among the to-be-searched videos to obtain the irrelevant videos.

A first sorting unit 503 is configured to sort the main videos according to a matching degree between the main videos and the feature search information to obtain a main video list for the user to select and play a video in the main video list; or sort, according to a degree of matching, indexes of video segments that meet a search criterion, and place an index of a video segment with a higher matching degree on the top and place an index of a video segment with a lower matching degree at the bottom to form an index list of the video segments for the user to select and play a video in the index list.

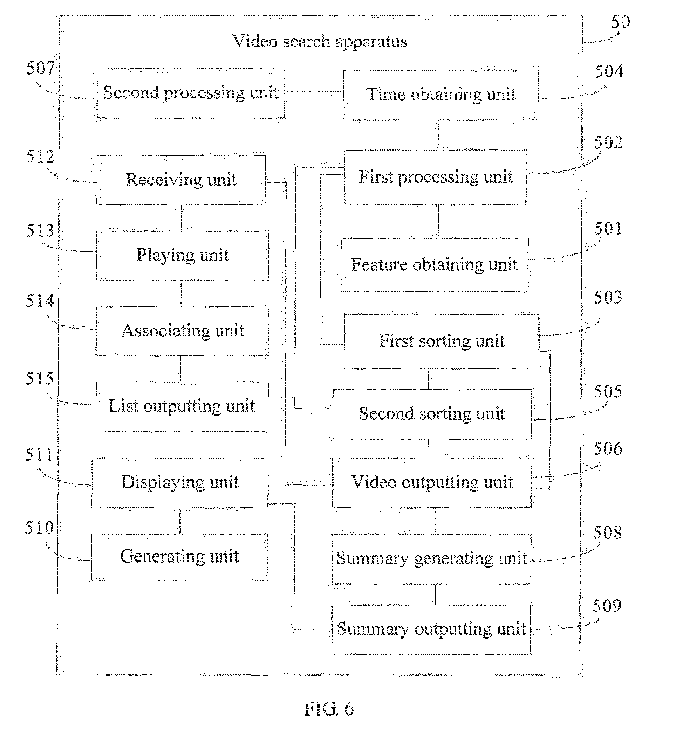

In this way, a processing unit cuts or filters out irrelevant videos among to-be-searched videos to avoid that a user wastes a large amount of time in the irrelevant videos during video search; and meanwhile, a first sorting unit sorts main videos according to a matching degree between the main videos and feature search information obtained by a feature obtaining unit, to facilitate video search of the user, thereby improving video search efficiency and increasing a hit rate of a target video. Further, as shown in FIG. 6, the video search apparatus 50 further includes:
A time obtaining unit 504 is configured to obtain to-be-searched videos within a period of time input by the user.

A second sorting unit 505 is configured to sort the irrelevant videos according to a matching degree between the irrelevant videos and the feature search information to obtain an irrelevant video list. The first sorting unit 503 and the second sorting unit 505 may be integrated into one entity or may be implemented by a device such as a computer.

A video outputting unit 506 is configured to output the main video list and the irrelevant video list, where the irrelevant video list may be after the main video list for the user to select and play a video in the main video list and the irrelevant video list.

A second processing unit 507 is configured to cut videos that do not belong to a video generation range among the obtained videos to obtain the to-be-searched videos. The video generation range may include any one or more of: a location, a behavior, a behavior subject, and a color of a behavior subject within a specific period of time. The first processing unit 502 and the second processing unit 507 may be integrated into one entity.

A summary generating unit 508 is configured to generate corresponding video summary information corresponding to each video in a video list according to each information in the video generation range.

A summary outputting unit 509 is configured to output the video summary information corresponding to each video in the video list.

A generating unit 510 is configured to generate a video snapshot image or a video clip corresponding to the video summary information.

A displaying unit 511 is configured to display the video snapshot image or the video clip when the user triggers the video summary information.

A receiving unit 512 is configured to receive a video selected by the user.

A playing unit 513 is configured to play the video selected by the user.

An associating unit 514 is configured to obtain, among the to-be-searched videos according to feature information of the video in the video selected by the user, an associated video list of the video selected by the user, where the feature information of the video belongs to the video generation range.

A list outputting unit 515 is configured to output the associated video list for the user to select and play a video in the associated video list.

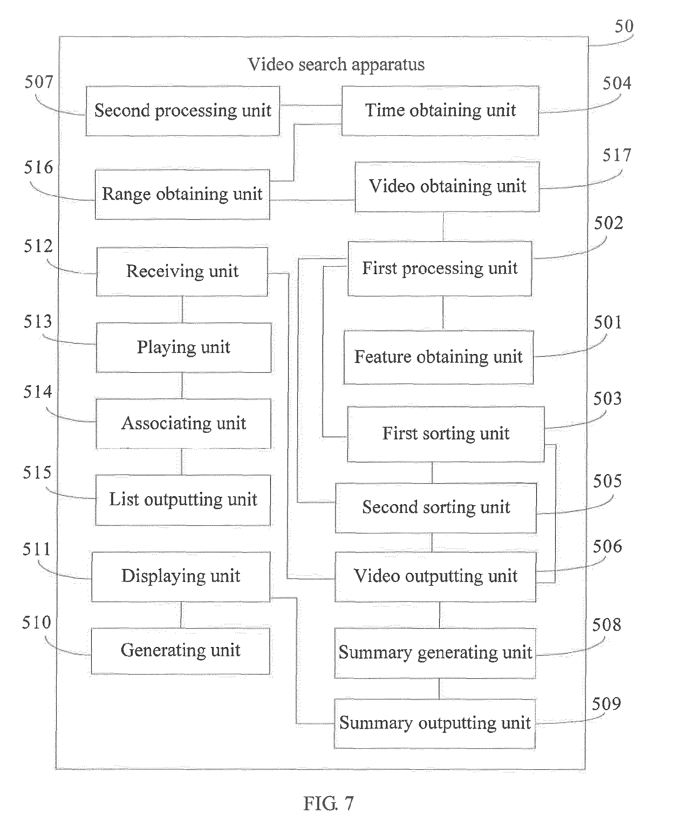

Further, the to-be-searched videos are video records, and as shown in FIG. 7, the apparatus 50 further includes:
A range obtaining unit 516 is configured to obtain an area range selected by the user on an electronic map.

A video obtaining unit 517 is configured to obtain video records in the area range as the to-be-searched videos.

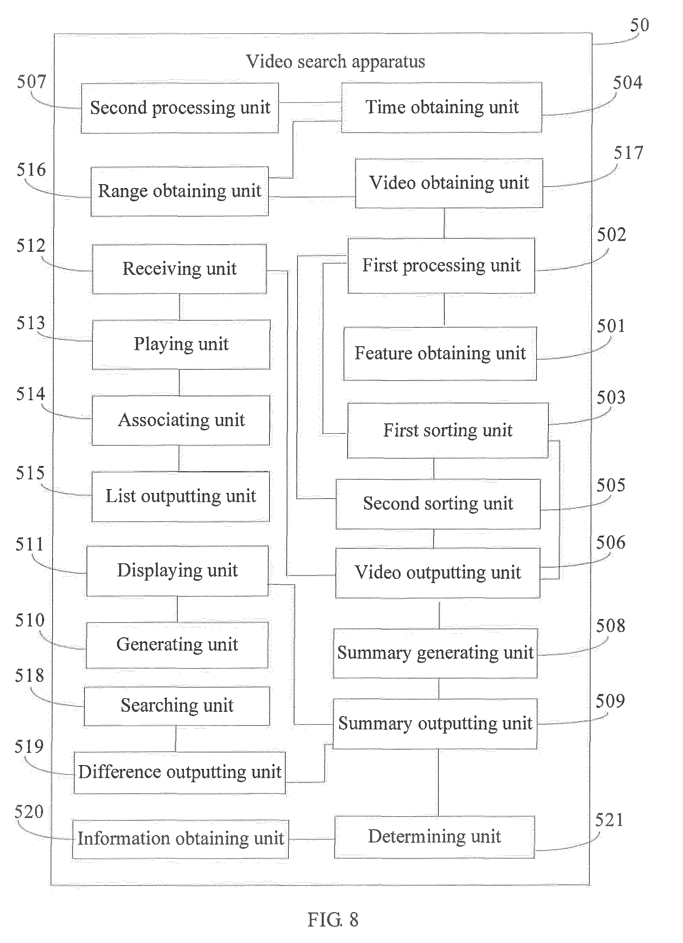

When a behavior subject in the to-be-searched video is a vehicle, as shown in FIG. 8, the apparatus 50 further includes:
A searching unit 518 is configured to search an intelligent analysis system and/or a geographic information system GIS and/or a vehicle information library for relevant information about the vehicle in the to-be-searched video.

In this case, the video summary output by the summary outputting unit 509 includes the relevant information about the vehicle.

A difference outputting unit 519 is configured to: when different feature descriptions about a same feature exist in the feature search information and the relevant information about the vehicle, output the different feature descriptions. In particular, the feature descriptions may be shown in the video summary information.

An information obtaining unit 520 is configured to obtain location information of a camera apparatus corresponding to the to-be-searched video.

A determining unit 521 is configured to determine a traveling direction of the vehicle according to the location information of the camera apparatus and a moving direction of the vehicle relative to the camera apparatus in the to-be-searched video.

In this case, the video summary output by the summary outputting unit 509 includes the traveling direction of the vehicle.

With the video search apparatus provided in the embodiment of the present invention, a processing unit cuts irrelevant videos among to-be-searched videos to avoids that a user wastes a large amount of time in the irrelevant videos during video search; and meanwhile, a first sorting unit sorts main videos according to a matching degree between the main videos and feature search information obtained by a feature obtaining unit, to facilitate video search of the user, thereby improving video search efficiency and increasing a hit rate of a target video.

An embodiment of the present invention provides a video search system, which includes: any one of the foregoing video search apparatuses.

Further, when the foregoing system is applied in a city security surveillance system, the video search system may further include:
A camera apparatus is configured to collect a video record. Meanwhile, the camera apparatus may also store the foregoing video record. In particular, in an actual application, the foregoing video record may also be stored on a central server of a city security surveillance system, which is only an example for description herein, and a specific storage location of the video record is not limited in the present invention.

The intelligent analysis system is configured to analyze to-be-searched videos.

A geographic information system is configured to provide space information for the video search apparatus, so that the video search system searches for relevant information about a vehicle in the to-be-searched videos; and/or
a vehicle information library is configured to provide vehicle information to the video search apparatus, so that the video search system searches for relevant information about a vehicle in the to-be-searched video.

A person of ordinary skill in the art may understand that, all or a part of the steps of the foregoing method embodiments may be implemented by a program instructing relevant hardware. The foregoing program may be stored in a computer readable storage medium. When the program runs, the steps of the foregoing method embodiments are performed. The foregoing storage medium may include any mediums capable of storing program code, such as a ROM, a RAM, a magnetic disk, or an optical disc.

The foregoing descriptions are only specific implementation manners of the present invention, but are not intended to limit the protection scope of the present invention. Variations or replacements that can be easily figured out by a person skilled in the art within the technical scope disclosed in the present invention shall all fall within the protection scope of the present invention. Therefore, the protection scope of the present invention shall be subject to the protection scope of the claims.

## Claims

1. A video search method, comprising:
obtaining feature search information input by a user;
cutting irrelevant videos that do not comprise the feature search information among to-be-searched videos to obtain main videos; or filtering indexes of to-be-searched videos according to the feature search information to obtain indexes of video segments that meet a search criterion; and
sorting the main videos according to a matching degree between the main videos and the feature search information to obtain a main video list for the user to select and play a video in the main video list; or sorting, according to a matching degree, the indexes of the video segments that meet the search criterion, to form an index list of the video segments for the user to select and play a video in the index list.

2. The method according to claim 1, before the obtaining feature search information input by a user, further comprising:
obtaining the to-be-searched videos within a period of time input by the user.

3. The method according to claim 1, wherein the step of sorting, according to a matching degree, the indexes of the video segments that meet the search criterion specifically is: placing an index of a video segment with a higher matching degree on the top and placing an index of a video segment with a lower matching degree at the bottom.

4. The method according to claim 1, before the obtaining feature search information input by a user, further comprising:
cutting videos that do not belong to a video generation range among obtained videos to obtain the to-be-searched videos; or filtering indexes of videos that do not belong to a video generation range among obtained videos to obtain indexes of the to-be-searched videos, wherein the video generation range comprises any one or more of: a location, a behavior, a behavior subject, and a color of a behavior subject within a specific period of time.

5. The method according to claim 4, further comprising:
generating corresponding video summary information corresponding to each video in a video list according to each information in the video generation range;
outputting the video summary information corresponding to each video in the video list;
generating a video snapshot image or a video clip corresponding to the video summary information; and
displaying the video snapshot image or the video clip when the user triggers the video summary information.

6. The method according to claim 5, further comprising:
receiving a video selected by the user;
playing the video selected by the user;
obtaining, among the to-be-searched videos according to feature information of the video in the video selected by the user, an associated video index list of the video selected by the user, wherein the feature information of the video belongs to the video generation range; and
outputting the associated video list for the user to select and play a video in the associated video list.

7. The method according to any one of claims 1 to 6, wherein the to-be-searched videos are video records, and before the obtaining feature search information input by a user, the method further comprises:
obtaining an area range selected by the user on an electronic map; and
obtaining video records in the area range as the to-be-searched videos.

8. The method according to claim 7, when a behavior subject in the to-be-searched video is a vehicle, further comprising:
searching an intelligent analysis system and/or a geographic information system GIS and/or a vehicle information library for relevant information about the vehicle in the to-be-searched video, wherein
the video summary comprises the relevant information about the vehicle.

9. The method according to claim 8, wherein when different feature descriptions about a same feature exist in the feature search information and the relevant information about the vehicle, the different feature descriptions are output.

10. The method according to claim 9, further comprising:
obtaining location information of a camera apparatus corresponding to the to-be-searched video; and
determining a traveling direction of the vehicle according to the location information of the camera apparatus and a moving direction of the vehicle relative to the camera apparatus in the to-be-searched video, wherein
the video summary comprises the traveling direction of the vehicle.

11. A video search apparatus, comprising:
a feature obtaining unit, configured to obtain feature search information input by a user;
a processing unit, configured to cut irrelevant videos that do not comprise the feature search information among to-be-searched videos to obtain main videos; or filter indexes of to-be-searched videos according to the feature search information to obtain indexes of video segments that meet a search criterion; and
a sorting unit, configured to sort the main videos according to a matching degree between the main videos and the feature search information to obtain a main video list for the user to select and play a video in the main video list; or sort, according to a matching degree, the indexes of the video segments that meet the search criterion, and place an index of a video segment with a higher matching degree on the top and place an index of a video segment with a lower matching degree at the bottom to form an index list of the video segments for the user to select and play a video in the index list.

12. The apparatus according to claim 11, wherein the sorting unit is further configured to sort the irrelevant videos according to a matching degree between the irrelevant videos and the feature search information to obtain an irrelevant video list; and
a video outputting unit is configured to output the main video list and the irrelevant video list for the user selects and plays a video in the main video list and the irrelevant video list.

13. The apparatus according to claim 11, wherein the processing unit is further configured to cut videos that do not belong to a video generation range among obtained videos to obtain the to-be-searched videos, wherein the video generation range comprises any one or more of: a location, a behavior, a behavior subject, and a color of a behavior subject within a specific period of time.

14. The apparatus according to claim 13, further comprising:
a summary generating unit, configured to generate corresponding video summary information corresponding to each video in a video list according to each information in the video generation range;
a summary outputting unit, configured to output the video summary information corresponding to each video in the video list;
a generating unit, configured to generate a video snapshot image or a video clip corresponding to the video summary information; and
a displaying unit, configured to display the video snapshot image or the video clip when the user triggers the video summary information.

15. The apparatus according to any one of claims 11 to 14, wherein the to-be-searched videos are video records, and the apparatus further comprises:
a range obtaining unit, configured to obtain an area range selected by the user on an electronic map; and
a video obtaining unit, configured to obtain video records in the area range as the to-be-searched videos.

16. The apparatus according to claim 15, when a behavior subject in the to-be-searched video is a vehicle, further comprising:
a searching unit, configured to search an intelligent analysis system and/or a geographic information system GIS and/or a vehicle information library for relevant information about the vehicle in the to-be-searched video;
a difference outputting unit, configured to: when different feature descriptions about a same feature exist in the feature search information and the relevant information about the vehicle, output the different feature descriptions;
an information obtaining unit, configured to obtain location information of a camera apparatus corresponding to the to-be-searched video;
a determining unit, configured to determine a traveling direction of the vehicle according to the location information of the camera apparatus and a moving direction of the vehicle relative to the camera apparatus in the to-be-searched video; wherein
the video summary output by the summary outputting unit comprises the relevant information about the vehicle and the traveling direction of the vehicle.

17. A video search system, comprising the video search apparatus according to any one of claims 11 to 16.
